# EUROPÄISCHE PATENTSCHRIFT

(11) **EP 3 209 899 B1**
(45) Veröffentlichungstag und Bekanntmachung des Hinweises auf die Patenterteilung: **12.12.2018**
(21) Anmeldenummer: 15791490.4
(22) Anmeldetag: 13.10.2015
(51) Int. Cl.: F16F 15/131

(54) **DREHSCHWINGUNGSDÄMPFER**
TORSIONAL VIBRATION DAMPER
AMORTISSEUR DE VIBRATIONS DE TORSION

(30) Priorität: 24.10.2014 DE 102014221686
(43) Veröffentlichungstag der Anmeldung: 30.08.2017
(73) Patentinhaber: Schaeffler Technologies AG & Co. KG, 91074 Herzogenaurach (DE)
(72) Erfinder: MENDE, Hartmut, 77815 Bühl (DE); FENDER-OBERLE, Vincent, F-67150 Erstein-Krafft (FR)
(86) Internationale Anmeldenummer: PCT/DE2015/200475
(87) Internationale Veröffentlichungsnummer: WO 2016/062312

(56) Entgegenhaltungen:
- DE-A1-102013 204 756
- DE-A1-102013 205 919

## Beschreibung

Die Erfindung betrifft einen Drehschwingungsdämpfer, insbesondere Zweimassenschwungrad, mit dessen Hilfe Drehschwingungen einer Antriebswelle eines Kraftfahrzeugmotors gedämpft werden können.
Beispielsweise aus DE 10 2008 004 150 A1 ist ein Zweimassenschwungrad bekannt, bei dem zur Drehschwingungsdämpfung einer Kurbelwelle eines Kraftfahrzeugverbrennungsmotors eine Primärmasse über eine Bogenfeder mit einer relativ zur Primärmasse verdrehbaren Sekundärmasse gekoppelt ist. Die Bogenfeder ist in einem Bogenfederkanal angeordnet, wobei eine Kanalwand des Bogenfederkanals durch die Primärmasse ausgebildet ist. In den Bogenfederkanal ragt ein Flansch der Sekundärmasse hinein, der über einen Reibring an der Kanalwand abgestützt ist.

Das Dokument DE 10 2013 205919 A1 wird als nächstliegender Stand der Technik angesehen und offenbart alle Merkmale des Oberbegriffs des Anspruchs 1.

Es besteht ein ständiges Bedürfnis die Lebensdauer eines Drehschwingungsdämpfers zu erhöhen.
Es ist die Aufgabe der Erfindung Maßnahmen aufzuzeigen, die einen Drehschwingungsdämpfer mit einer hohen Lebensdauer ermöglichen.
Die Lösung der Aufgabe erfolgt erfindungsgemäß durch einen Drehschwingungsdämpfer mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können. Erfindungsgemäß ist ein Drehschwingungsdämpfer, insbesondere Zweimassenschwungrad, zur Drehschwingungsdämpfung zwischen einer Antriebswelle eines Kraftfahrzeugmotors und einer Getriebeeingangswelle eines Kraftfahrzeuggetriebes vorgesehen mit einer Primärmasse zum Einleiten eines Drehmoments, einer relativ zur Primärmasse verdrehbaren Sekundärmasse zum Ausleiten eines Drehmoments, einem mit der Primärmasse und der Sekundärmasse koppelbaren Energiespeicherelement, insbesondere Bogenfeder, wobei das Energiespeicherelement in einem von der Primärmasse ausgebildeten Aufnahmekanal aufgenommen ist, einem von radial innen in den Aufnahmekanal hineinragenden Ausgangsflansch zur Drehmomentübertragung zwischen dem Energiespeicherelement und der Sekundärmasse, wobei die Sekundärmasse mindestens eine Montageöffnung zum axialen Hindurchführen eines Befestigungsmittels, insbesondere Befestigungsschraube, zur Befestigung der Primärmasse mit einer Antriebswelle eines Kraftfahrzeugmotors aufweist, und einer an der Primärmasse und der Sekundärmasse anliegenden Dichteinrichtung, wobei die Dichteinrichtung nach radial innen einen Montagekanal zur Durchfuhr des Befestigungsmittels begrenzt.

Der Aufnahmekanal weist insbesondere ein Schmiermittel, vorzugsweise Schmierfett, auf, um Reibungseffekte zwischen dem Energiespeicherelement und dem Aufnahmekanal und/oder dem Ausgangsflansch durch Relativbewegungen zu reduzieren. Für eine hohe Lebensdauer des Drehschwingungsdämpfers kann eine möglichst lang anhaltende Schmierwirkung für das Energiespeicherelement vorteilhaft sein. Es wurde jedoch erkannt, dass durch die Montageöffnung der Sekundärmasse Verunreinigungen, beispielsweise Abriebpartikel, Staub, Wasser oder Öl, eindringen können, die durch die auf die Verunreinigungen im laufenden Betrieb des Drehschwingungsdämpfers wirkenden Fliehkräfte bis in den Aufnahmekanal gelangen können, wo die Verunreinigungen unnötige Reibung verursachen und/oder einen Teil des Schmiermittels auswaschen können, wodurch die Lebensdauer des Energiespeicherelements und damit die Lebensdauer des Drehschwingungsdämpfers reduziert werden kann. Insbesondere wenn sich an dem Drehschwingungsdämpfer eine nass laufende Reibungskupplung anschließt, ist es grundsätzlich möglich, dass für die Reibungskupplung vorgesehenes Öl über die Montageöffnung in den Drehschwingungsdämpfer eindringen kann.

Mit Hilfe der Dichteinrichtung kann das Eindringen von Verunreinigungen in den Drehschwingungsdämpfer vermieden oder zumindest deutlich erschwert werden. Insbesondere ist die Dichteinrichtung hierbei in radialer Richtung möglichst nahe an der Montageöffnung positioniert und kann einen Teil des für das Befestigungsmittel vorgesehenen Montagekanals ausbilden, der vorzugsweise im Wesentlichen eine axiale Verlängerung der Montageöffnung darstellt. Der Montagekanal ist insbesondere groß genug, um das Befestigungsmittel in axialer Richtung durchzuführen, und vorzugsweise gleichzeitig eng genug, dass das Befestigungsmittel bei einer für die Montage unpassenden Schräglage an dem Montagekanal, insbesondere an der Dichteinrichtung, anschlagen kann, wodurch eine Schrägstellung des Befestigungsmittels während der Montage vermieden und die Montage vereinfacht werden kann. Vorzugsweise bildet der Montagekanal und/oder die Dichteinrichtung mit dem Befestigungsmittel eine Spielpassung aus, beispielsweise H7, H8, H11, G7, F8, E9 oder D10. Über die Montageöffnung in den Montagekanal eindringende Verunreinigungen können fliehkraftbedingt und/oder schwerkraftbedingt an dem den Montagekanal begrenzenden Teil der Dichteinrichtung anliegen und nach einiger Zeit aus den Montagekanal über die Montageöffnung wieder herausfließen beziehungsweise herausrieseln. Da die Dichteinrichtung insbesondere möglichst nahe an der Montageöffnung positioniert ist, ist eine in dem Montagekanal ausgebildete Tasche und/oder eine durch die Montageöffnung ausgebildete Stufe vermieden oder zumindest reduziert, so dass die Verunreinigungen leicht aus dem Montagekanal wieder herausgelangen können und nicht in dem Montagekanal dauerhaft verbleiben. Das Risiko, dass die in den Montagekanal gelangten Verunreinigungen durch die Dichteinrichtung hindurch kriechen können, ist dadurch zumindest reduziert. Gleichzeitig ist vorgesehen, dass die Dichteinrichtung an der Primärmasse und an der Sekundärmasse, vorzugsweise gleitend, anliegt, so dass nur genau zwei Dichtflächen von der Dichteinrichtung abgedichtet werden. Zusätzliche an dem Ausgangsflansch anliegende Dichtflächen können eingespart werden, so dass unnötige Reibungseffekte und/oder Verschleißeffekte vermieden werden können. Da die Dichteinrichtung möglichst nahe an der Montageöffnung positioniert werden kann, ist es möglich die Dichteinrichtung in einem Radialbereich vorzusehen, der von dem Ausgangsflansch nicht in radialer Richtung durchdrungen wird. Durch die Positionierung der Dichteinrichtung so nah an der Montageöffnung, dass die Dichteinrichtung einen Teil des Montagekanals für das Befestigungsmittel ausbilden kann, kann ein Eindringen von Verunreinigungen in den Aufnahmekanal vermieden werden, so dass ein Drehschwingungsdämpfer mit einer hohen Lebensdauer ermöglicht ist.

Der Aufnahmekanal kann vorzugsweise mehrteilig ausgebildet sein, indem beispielsweise zur Ausbildung des Aufnahmekanals ein Kanaldeckel mit der Primärmasse, insbesondere durch Schweißen, verbunden ist. Der Ausgangsflansch kann insbesondere Teil der Sekundärmasse sein. Vorzugsweise ist der Ausgangsflansch mehrteilig, um weitere Funktionen ausführen zu können. Insbesondere weist der Ausgangsflansch einen Scheibendämpfer auf, vorzugsweise um Drehschwingungen in einem Frequenzbereich zu dämpfen, die von dem mit Hilfe des in dem Aufnahmekanal angeordneten Energiespeicherelements zu dämpfenden Frequenzbereich verschieden sind. Der Aufnahmekanal kann insbesondere nach radial innen weisende Anschläge aufweisen, über die das Drehmoment zwischen dem Energiespeicherelement und dem Aufnahmekanal übertragen werden kann. Die Anschläge sind insbesondere als spanlose Einprägung des Materials des Aufnahmekanals ausgebildet. Ferner kann das Energiespeicherelement innerhalb des Aufnahmekanals an dem Ausgangsflansch anschlagen, um das Drehmoment zwischen dem Energiespeicherelement und dem Ausgangsflansch zu übertragen. Die Sekundärmasse kann insbesondere über einen Mitnehmerring mit einem Kupplungsaggregat verbunden sein. Es ist auch möglich, dass die Sekundärmasse bereits eine Druckplatte einer Reibungskupplung ausbildet. Der Drehmomentfluss durch den Drehschwingungsdämpfer kann insbesondere je nach Betriebssituation von der Primärmasse zur Sekundärmasse oder von der Sekundärmasse zur Primärmasse erfolgen, beispielsweise um sowohl in einem Zugbetrieb als auch in einem Schubbetrieb Drehschwingung dämpfen zu können. Insbesondere ist die Primärmasse im Drehmomentfluss motorseitig einem Kraftfahrzeugmotor zu geordnet, während die Sekundärseite getriebeseitig einem Kraftfahrzeuggetriebe zugeordnet ist, wobei es auch umgekehrt sein sein.

Erfindungsgemäß weist die Dichteinrichtung einen an der Primärmasse anliegenden ersten Dichtring und einen an der Sekundärmasse anliegenden zweiten Dichtring auf, wobei mindestens eine zwischen dem ersten Dichtring und dem zweiten Dichtring angeordnete Dichtfeder zum Auseinanderdrücken des ersten Dichtrings und des zweiten Dichtrings vorgesehen ist. Der erste Dichtring und der zweite Dichtring können zueinander in axialer Richtung relativ beweglich ausgestaltet sein, wobei die mindestens eine Dichtfeder den ersten Dichtring und den zweiten Dichtring in die beabsichtigte Position drückt. Dadurch können Montagetoleranzen ausgeglichen und eine geeignete Dichtheit erreicht werden. Vorzugsweise sind mehrere, beispielsweise drei oder fünf, Dichtfedern vorgesehen, die insbesondere in Umfangsrichtung gleichmäßig verteilt positioniert sind. Die Dichtfeder ist insbesondere als Druckfeder ausgestaltet. Die Dichtfeder ist beispielsweise als Schraubenfeder, Tellerfeder, Elastomerblock oder Ähnliches ausgestaltet.

Vorzugsweise ist die von der mindestens einen Dichtfeder aufgebrachte Federkraft zum Ausgleich einer axialen Montagetoleranz für die Dichteinrichtung bemessen, wobei die Federkraft insbesondere zur Bereitstellung einer für eine fluiddichte, insbesondere wasserdichte, Abdichtung der Dichteinrichtung an der Primärmasse und an der Sekundärmasse bemessen ist. Die Dichtfeder kann eine Federkennlinie aufweisen, die es ermöglicht eine Montagetoleranz von beispielsweise ± 1 mm auszugleichen und auch in den zu erwartenden axialen Extrempositionen eine ausreichende Anpresskraft für die Dichtringe bereitzustellen, um eine im Wesentlichen wasserdichte Dichtheit zu erreichen. Durch die geringen Toleranzanforderungen können die Herstellungskosten des Drehschwingungsdämpfers gering gehalten werden, wobei gleichzeitig eine ausreichende Dichtheit der Dichteinrichtung gegeben sein kann.

Besonders bevorzugt bilden der erste Dichtring und der zweite Dichtring in radialer Richtung eine Labyrinthdichtung aus, wobei insbesondere der erste Dichtring und der zweite Dichtring in radialer Richtung betrachtet sich zumindest teilweise überdecken. Die Labyrinthdichtung erlaubt eine axiale Relativbewegbarkeit der Dichtringe und kann gleichzeitig eine ausreichende Dichtheit zwischen den Dichtringen ermöglichen.

Insbesondere sind der erste Dichtring und der zweite Dichtring drehfest miteinander gekoppelt, wobei insbesondere der erste Dichtring, insbesondere nach radial außen und/oder nach radial innen, abstehende erste Erhebungen und der zweite Dichtring, insbesondere nah radial außen und/oder nach radial innen, abstehende zweite Erhebungen aufweisen, wobei die ersten Erhebungen und die zweiten Erhebungen formschlüssig ineinander eingreifen. Durch die drehfeste Koppelung der Dichtringe wird eine relative Verdrehbarkeit der Dichtringe zueinander vermieden, so dass auf die mindestens eine Dichtfeder keine unnötigen Belastungen in Umfangsrichtung aufgebracht werden und ein Verbiegen der Dichtfeder vermieden werden kann. Die Lebensdauer der Dichtfeder ist dadurch erhöht. Die Dichtringe können sich insbesondere zumindest in einem Teilbereich, vorzugsweise in der Art einer Labyrinthdichtung, überlappen, so dass die Erhebungen in radialer Richtung abstehen können. Die Dichtscheiben können in diesem Teilbereich vergleichbar zu Reibsteuerscheiben oder Zahnrädern ausgestaltet sein. Durch die ineinander gesteckten Erhebungen kann eine zusätzliche Dichtwirkung in der Art einer Labyrinthdichtung erreicht werden, wodurch die Dichtheit der Dichteinrichtung verbessert ist. Ferner ist es möglich über die radial nach außen abstehenden Erhebungen die Dichteinrichtung drehfest mit dem Ausgangsflansch zu verbinden.

Vorzugsweise ist die Dichtfeder als Schraubenfeder ausgestaltet, wobei ein Dorn des ersten Dichtrings und/oder des zweiten Dichtrings in die Dichtfeder zumindest teilweise eingesteckt ist und/oder die Dichtfeder in einer korrespondierenden Tasche des ersten Dichtrings und/oder des zweiten Dichtrings zumindest teilweise aufgenommen ist. Die Dichtfeder kann dadurch bezogen auf ihre Längsachse radial innen und/oder radial außen an den Dichtringen abgestützt sein, so dass ein Knicken vermieden sein kann. Insbesondere wenn der eine Dichtring mit einem Dorn in eine Tasche des anderen Dichtrings eingreifen kann, kann in diesem Bereich eine Labyrinthdichtung ausgebildet sein, so dass durch das Vorsehen der Dichtfeder die Dichtheit nicht beeinträchtigt sondern sogar verbessert sein kann.

Besonders bevorzugt ist der erste Dichtring und der zweite Dichtring aus einem Kunststoffmaterial, insbesondere EPDM, Silikon-Elastomer, PU-Elastomer, PE, PP oder PA, hergestellt. Die Dichtringe können insbesondere je nach Anwendungsfall aus einem elastomeren oder thermoplastischen Kunststoff hergestellt sein. Die Dichtringe können dadurch aus einem kostengünstigen Material hergestellt sein und eine ausreichende Dichtheit gegenüber der aus Stahl oder Gusseisen hergestellten Primärmasse und Sekundärmasse bereitstellen. Insbesondere sind die Dichtringe im Vergleich zum Material der Primärmasse und der Sekundärmasse weicher ausgestaltet und weisen eine ausreichende Abriebfestigkeit auf, um bei einem Abgleiten an der Primärmasse und der Sekundärmasse nicht unnötig zu verschleißen.

Insbesondere ist ein radial äußerster Rand der Montageöffnung auf einem ersten Radius R₁ angeordnet und ein radial innerer Rand der Dichteinrichtung an der Winkelstelle des radial äußersten Rands der Montageöffnung auf einem Radius R₂ angeordnet, wobei 0,95≤ R₁/R₂ ≤ 1,20, insbesondere 1,00≤ R₁/R₂ ≤ 1,10, vorzugsweise 1,01≤ R₁/R₂ ≤ 1,05 und besonders bevorzugt 1,02≤ R₁/R₂ ≤ 1,025 gilt. Die Dichteinrichtung kann dadurch in radialer Richtung so nah an der Montageöffnung positioniert sein, dass in den Montagekanal eingedrungene Verunreinigungen leicht über die Montageöffnung wieder herausgelangen können.

Vorzugsweise ist die Dichteinrichtung vollständig radial innerhalb des Ausgangsflanschs angeordnet, wobei insbesondere der Ausgangsflansch radial außerhalb zur Dichteinrichtung drehfest mit der Sekundärmasse verbunden ist. Die Dichteinrichtung kann dadurch radial innerhalb zu dem Ausgangsflansch positioniert sein, so dass es nicht erforderlich ist den Ausgangsflansch ebenfalls abzudichten. Der Ausgangsflansch und/oder die Sekundärmasse können radial außerhalb zu der Dichteinrichtung beispielsweise miteinander befestigt, insbesondere vernietet, oder über in axialer Richtung abstehende Absätze miteinander formschlüssig verzahnt sein.

Besonders bevorzugt ist die Sekundärmasse radial innerhalb zu der Montageöffnung mittelbar oder unmittelbar an der Primärmasse gelagert. Ein Verkippen der Sekundärmasse relativ zur Primärmasse kann dadurch vermieden werden. Ferner können auf die Sekundärmasse wirkende Radialkräfte und/oder Axialkräfte über die Primärmasse abgetragen werden. Die Sekundärmasse kann beispielsweise an einer mit der Primärmasse verbundenen Nabe gelagert sein. Die Lagerung der Sekundärmasse kann beispielsweise über ein Rillenkugellager zur Abstützung von Radialkräften und/oder Axialkräften erfolgen. Es ist auch möglich die Sekundärmasse über ein Gleitlager, insbesondere ein Axial- und/oder Radial-Gleitlager, zu lagern.

Die Erfindung betrifft ferner ein Kupplungsaggregat zum Übertragen eines Drehmoments einer Motorwelle eines Kraftfahrzeugmotors an mindestens eine Getriebeeingangswelle eines Kraftfahrzeuggetriebes, mit einer Reibungskupplung, insbesondere eine nasse Doppelkupplung, zum Kuppeln der Motorwelle mit der Getriebeeingangswelle und einem mit der Reibungskupplung verbundenen Drehschwingungsdämpfer, der wie vorstehend beschrieben aus- und weitergebildet sein kann, zum Einleiten eines drehschwingungsgedämpften Drehmoments in die Reibungskupplung. Insbesondere weist die Sekundärmasse des Drehschwingungsdämpfers eine Reibfläche zum Verpressen einer mit einer Getriebeeingangswelle drehfest verbindbaren Kupplungsscheibe mit Hilfe einer in axialer Richtung relativ zu der Reibfläche der Sekundärmasse verlagerbaren Anpressplatte auf. Die Reibungskupplung ist insbesondere als nass laufende Reibungskupplung ausgestaltet, die mit einem Öl gekühlt werden kann.

Durch die Positionierung der Dichteinrichtung des Drehschwingungsdämpfer so nah an der Montageöffnung, dass die Dichteinrichtung einen Teil des Montagekanals für das Befestigungsmittel ausbilden kann, kann ein Eindringen von Verunreinigungen in den Aufnahmekanal vermieden werden, so dass ein Drehschwingungsdämpfer mit einer hohen Lebensdauer ermöglicht ist.

Die Erfindung betriff ferner einen Antriebsstrang für ein Kraftfahrzeug mit einem Drehschwingungsdämpfer, der wie vorstehend beschrieben aus- und weitergebildet sein kann, wobei der Drehschwingungsdämpfer, insbesondere über die Primärmasse, mit einer Antriebswelle eines Kraftfahrzeugmotors und, insbesondere über die Sekundärmasse, mit einem Kupplungsaggregat zum Kuppeln der Antriebswelle mit mindestens einer Getriebeeingangswelle eines Kraftfahrzeuggetriebes verbunden ist. Das Kupplungsaggregat ist insbesondere als nass laufende Reibungskupplung ausgestaltet, die mit einem Öl gekühlt werden kann. Durch die Positionierung der Dichteinrichtung des Drehschwingungsdämpfer so nah an der Montageöffnung, dass die Dichteinrichtung einen Teil des Montagekanals für das Befestigungsmittel ausbilden kann, kann ein Eindringen von Verunreinigungen in den Aufnahmekanal vermieden werden, so dass ein Drehschwingungsdämpfer mit einer hohen Lebensdauer ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht eines Drehschwingungsdämpfers,
Fig. 2: eine schematische Detailansicht des Drehschwingungsdämpfers aus Fig. 1 und
Fig. 3: eine schematische geschnittene Draufsicht auf eine Dichteinrichtung des Drehschwingungsdämpfers aus Fig. 1 entlang einer Schnittebene III - III.

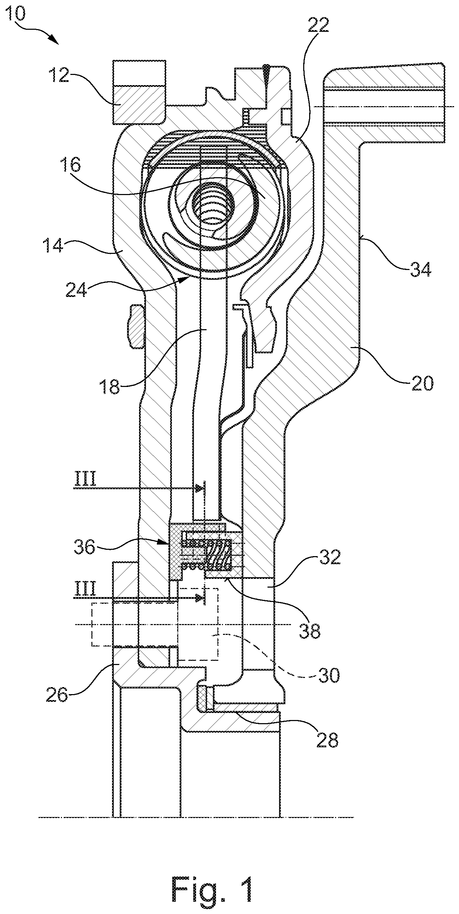

Der in Fig. 1 dargestellte als Zweimassenschwungrad ausgestaltete Drehschwingungsdämpfer 10 weist eine mit einem Starterring 12 versehene Primärmasse 14 auf, die über ein als Bogenfeder ausgestaltetes Energiespeicherelement 16 begrenzt relativ verdrehbar über einen Ausgangsflansch 18 mit einer Sekundärmasse 20 gekoppelt ist. Die Primärmasse 14 weist einen angeschweißten Kanaldeckel 22 auf, so dass die Primärmasse einen Aufnahmekanal 24 ausbildet, in dem das Energiespeicherelement 16 angeordnet ist. In dem Aufnahmekanal 24 kann ferner ein Schmiermittel, insbesondere Schmierfett, vorgesehen sein, um das Energiespeicherelement 16 in dem Aufnahmekanal 24 zu schmieren.

In dem dargestellten Ausführungsbeispiel ist eine Nabe 26 vorgesehen, an dem die Sekundärmasse 20 über ein in radialer Richtung und in axialer Richtung wirkendes Gleitlager 28 gelagert ist. Die Nabe 26 kann mit Hilfe eines als Befestigungsschraube ausgestalteten Befestigungsmittels 30 zusammen mit der Primärmasse 14 mit einer Antriebswelle, insbesondere Kurbelwelle, eines Kraftfahrzeugmotors befestigt werden. Um das Befestigungsmittel 30 mit Hilfe eines Werkzeugs betätigen zu können, weist die Sekundärmasse 20 eine Montageöffnung 32 auf, durch die das Befestigungsmittel 30 bei der Montage hindurch gesteckt werden kann.

Im dargestellten Ausführungsbeispiel stellt die Sekundärmasse 20 gleichzeitig eine Druckplatte einer Reibungskupplung dar und weist hierzu eine Reibfläche 34 auf, gegen die mit Hilfe einer axial verlagerbaren Anpressplatte eine mit einer Getriebeeingangswelle eines Kraftfahrzeuggetriebes drehfest gekoppelte Kupplungsscheibe reibschlüssig gepresst werden kann. Insbesondere wenn die Reibungskupplung als nass laufende Reibungskupplung ausgestaltet ist, können beispielsweise Öl oder andere Verunreinigungen durch die Montageöffnung 32 in den Drehschwingungsdämpfer 10 eintreten. Damit die Verunreinigungen nicht in den Aufnahmekanal 24 gelangen, ist eine Dichteinrichtung 36 vorgesehen, die vollständig radial innerhalb zu dem Ausgangsflansch 18 in radialer Nähe der Montageöffnung 32 vorgesehen ist und dichtend an der Primärmasse 14 und der Sekundärmasse 20 anliegt. Die Montageöffnung 32 und die Dichteinrichtung 36 können nach radial außen einen im Wesentlichen absatzlosen Montagekanal 40 begrenzen, dessen Außendurchmesser im Wesentlichen gerade ausreicht mit Spiel das Befestigungsmittel 30 hindurchzuführen.

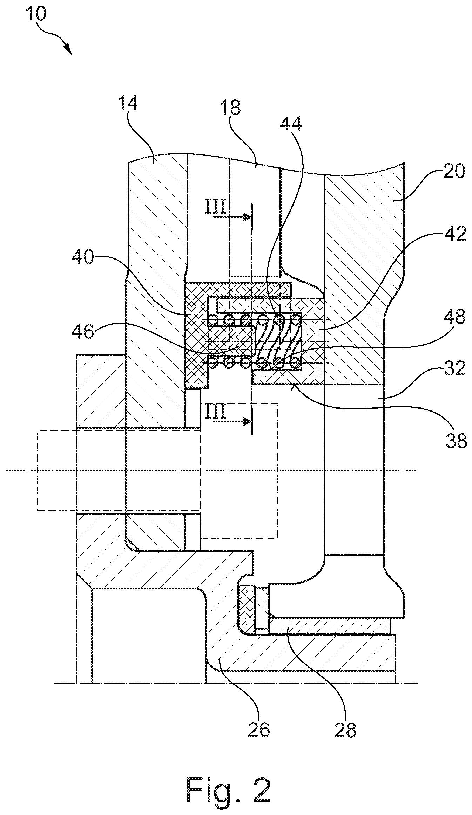

Wie in Fig. 2 dargestellt kann die Dichteinrichtung 36 einen an der Primärmasse 14 anliegenden ersten Dichtring 40 und einen in axialer Richtung relativ zu dem ersten Dichtring 40 verschiebbaren und an der Sekundärmasse 20 anliegenden zweiten Dichtring 42 aufweisen, die von einer Dichtfeder 44 auseinander gedrückt sind. Hierbei greift der erste Dichtring 40 über einen Dorn 46 in die als Schraubenfeder ausgestaltete Dichtfeder 44 ein, während die Dichtfeder 44 in einer korrespondierenden rohrförmigen Tasche 48 des zweiten Dichtrings 42 eingesetzt ist. Durch die dreidimensionale Formgestaltung des ersten Dichtrings 40 und des zweiten Dichtrings 42 ist durch die Dichteinrichtung 36 eine in radialer Richtung wirkende Labyrinthdichtung ausgebildet.

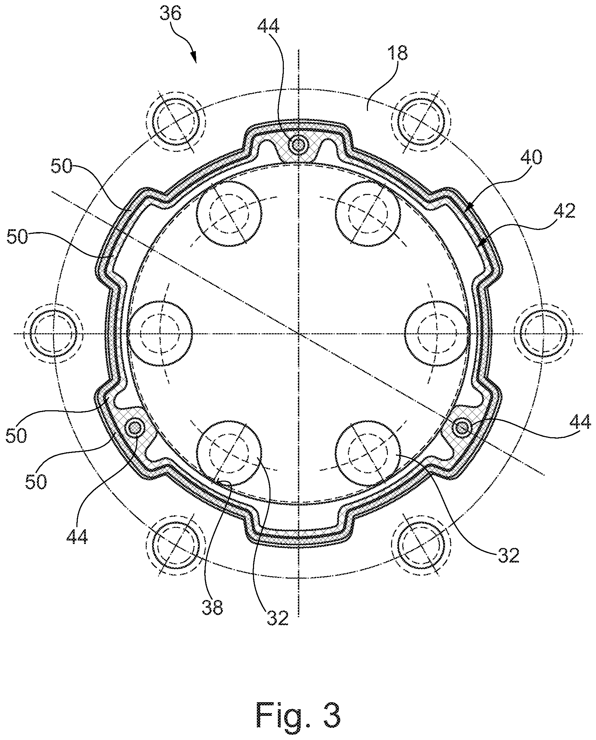

Wie in Fig. 3 dargestellt weisen der erste Dichtring 40 und der zweite Dichtring 42 vergleichbar zu einem Zahnrad oder einer Reibsteuerscheibe nach radial außen abstehende Erhebungen 50 auf. Die Erhebungen 50 der Dichtringe 40, 42 greifen formschlüssig ineinander ein, so dass eine drehfeste formschlüssige Verbindung des ersten Dichtrings 40 mit dem zweiten Dichtring 42 gegeben ist. Gleichzeitig ist es möglich, dass die Erhebungen 50 formschlüssig in den Ausgangsflansch 18 eingreifen, so dass die Dichteinrichtung 36 mit der Drehzahl des Ausgangsflanschs 18 mitdrehen kann.

### Bezugszeichenliste

- 10: Drehschwingungsdämpfer
- 12: Starterring
- 14: Primärmasse
- 16: Energiespeicherelement
- 18: Ausgangsflansch
- 20: Sekundärmasse
- 22: Kanaldeckel
- 24: Aufnahmekanal
- 26: Nabe
- 28: Gleitlager
- 30: Befestigungsmittel
- 32: Montageöffnung
- 34: Reibfläche
- 36: Dichteinrichtung
- 38: Montagekanal
- 40: erster Dichtring
- 42: zweiter Dichtring
- 44: Dichtfeder
- 46: Dorn
- 48: Tasche
- 50: Erhebung

## Patentansprüche

1. Drehschwingungsdämpfer, insbesondere Zweimassenschwungrad, zur Drehschwingungsdämpfung zwischen einer Antriebswelle eines Kraftfahrzeugmotors und einer Getriebeeingangswelle eines Kraftfahrzeuggetriebes, mit
einer Primärmasse (14) zum Einleiten eines Drehmoments,
einer relativ zur Primärmasse (14) verdrehbaren Sekundärmasse (20) zum Ausleiten eines Drehmoments,
einem mit der Primärmasse (14) und der Sekundärmasse (20) koppelbaren Energiespeicherelement (16), insbesondere Bogenfeder, wobei das Energiespeicherelement (16) in einem von der Primärmasse (14) ausgebildeten Aufnahmekanal (24) aufgenommen ist,
einem von radial innen in den Aufnahmekanal (24) hineinragenden Ausgangsflansch (18) zur Drehmomentübertragung zwischen dem Energiespeicherelement (16) und der Sekundärmasse (20),
wobei die Sekundärmasse (20) mindestens eine Montageöffnung (32) zum axialen Hindurchführen eines Befestigungsmittels (30), insbesondere Befestigungsschraube, zur Befestigung der Primärmasse (14) mit einer Antriebswelle eines Kraftfahrzeugmotors aufweist, und
einer an der Primärmasse (14) und der Sekundärmasse (20) anliegenden Dichteinrichtung (36), wobei die Dichteinrichtung (36) nach radial innen einen Montagekanal (38) zur Durchfuhr des Befestigungsmittels (30) begrenzt, wobei die Dichteinrichtung (36) einen an der Primärmasse (14) anliegenden ersten Dichtring (40) und einen an der Sekundärmasse (20) anliegenden zweiten Dichtring (42) aufweist, **dadurch gekennzeichnet, dass** mindestens eine zwischen dem ersten Dichtring (40) und dem zweiten Dichtring (42) angeordnete Dichtfeder (44) zum Auseinanderdrücken des ersten Dichtrings (40) und des zweiten Dichtrings (42) vorgesehen ist.

2. Drehschwingungsdämpfer nach Anspruch 1 **dadurch gekennzeichnet, dass** die von der mindestens einen Dichtfeder (44) aufgebrachte Federkraft zum Ausgleich einer axialen Montagetoleranz für die Dichteinrichtung (36) bemessen ist, wobei die Federkraft insbesondere zur Bereitstellung einer für eine fluiddichte, insbesondere wasserdichte, Abdichtung der Dichteinrichtung (36) an der Primärmasse (14) und an der Sekundärmasse (20) bemessen ist.

3. Drehschwingungsdämpfer nach Anspruch 1 oder 2 **dadurch gekennzeichnet, dass** der erste Dichtring (40) und der zweite Dichtring (42) in radialer Richtung eine Labyrinthdichtung ausbilden, wobei insbesondere der erste Dichtring (40) und der zweite Dichtring (42) in radialer Richtung betrachtet sich zumindest teilweise überdecken.

4. Drehschwingungsdämpfer nach einem der Ansprüche 1 bis 3 **dadurch gekennzeichnet, dass** der erste Dichtring (42) und der zweite Dichtring (42) drehfest miteinander gekoppelt sind, wobei insbesondere der erste Dichtring (40) nach radial außen und/oder nach radial innen abstehende erste Erhebungen (50) und der zweite Dichtring (42) nach radial außen und/oder nach radial innen abstehende zweite Erhebungen (50) aufweisen, wobei die ersten Erhebungen (50) und die zweiten Erhebungen (50) formschlüssig ineinander eingreifen.

5. Drehschwingungsdämpfer nach einem der Ansprüche 1 bis 4 **dadurch gekennzeichnet, dass** die Dichtfeder (44) als Schraubenfeder ausgestaltet ist, wobei ein Dorn (46) des ersten Dichtrings(40) und/oder des zweiten Dichtrings (42) in die Dichtfeder (44) zumindest teilweise eingesteckt ist und/oder die Dichtfeder (44) in einer korrespondierenden Tasche (48) des ersten Dichtrings (40) und/oder des zweiten Dichtrings (42) zumindest teilweise aufgenommen ist.

6. Drehschwingungsdämpfer nach einem der Ansprüche 1 bis 5 **dadurch gekennzeichnet, dass** der erste Dichtring (40) und der zweite Dichtring (42) aus einem Kunststoffmaterial, insbesondere EPDM, Silikon-Elastomer, PU-Elastomer, PE, PP oder PA, hergestellt ist.

7. Drehschwingungsdämpfer nach einem der Ansprüche 1 bis 6 **dadurch gekennzeichnet, dass** ein radial äußerster Rand der Montageöffnung (32) auf einem ersten Radius R₁ angeordnet ist und ein radial innerer Rand der Dichteinrichtung (36) an der Winkelstelle des radial äußersten Rands der Montageöffnung (32) auf einem Radius R₂ angeordnet ist, wobei 0,95≤ R₁/R₂ ≤ 1,20, insbesondere 1,00≤ R₁/R₂ ≤ 1,10, vorzugsweise 1,01≤ R₁/R₂ ≤ 1,05 und besonders bevorzugt 1,02≤ R₁/R₂ ≤ 1,025 gilt.

8. Drehschwingungsdämpfer nach einem der Ansprüche 1 bis 7 **dadurch gekennzeichnet, dass** die Dichteinrichtung (36) vollständig radial innerhalb des Ausgangsflanschs (18) angeordnet ist, wobei insbesondere der Ausgangsflansch (18) radial außerhalb zur Dichteinrichtung (36) drehfest mit der Sekundärmasse (20) verbunden ist.

9. Drehschwingungsdämpfer nach einem der Ansprüche 1 bis 8 **dadurch gekennzeichnet, dass** die Sekundärmasse (20) radial innerhalb zu der Montageöffnung (32) mittelbar oder unmittelbar an der Primärmasse (14) gelagert ist.

## Claims

1. Torsional vibration damper, in particular dual-mass flywheel, for torsional vibration damping between a drive shaft of a motor vehicle engine and a transmission input shaft of a motor vehicle transmission, having
a primary mass (14) for the introduction of a torque,
a secondary mass (20) which can be rotated relative to the primary mass (14) for the output of a torque,
an energy store element (16), in particular a bow spring, which can be coupled to the primary mass (14) and the secondary mass (20), the energy store element (16) being received in a receiving channel (24) which is configured by the primary mass (14),
an output flange (18) which protrudes from the radial inside into the receiving channel (24) for the transmission of torque between the energy store element (16) and the secondary mass (20),
the secondary mass (20) having at least one mounting opening (32) for axially guiding through a fastening means (30), in particular a fastening screw, for fastening the primary mass (14) to a drive shaft of a motor vehicle engine, and
a sealing device (36) which bears against the primary mass (14) and the secondary mass (20), the sealing device (36) delimiting a mounting channel (38) radially to the inside for the passage of the fastening means (30), the sealing device (36) having a first sealing ring (40) which bears against the primary mass (14) and a second sealing ring (42) which bears against the secondary mass (20), **characterized in that**
at least one sealing spring (44) which is arranged between the first sealing ring (40) and the second sealing ring (42) is provided for pressing the first sealing ring (40) and the second sealing ring (42) apart from one another.

2. Torsional vibration damper according to Claim 1, **characterized in that** the spring force which is applied by the at least one sealing spring (44) is dimensioned for the compensation of an axial mounting tolerance for the sealing device (36), the spring force being dimensioned, in particular, for the provision of a for a fluid-tight, in particular watertight, sealing action of the sealing device (36) against the primary mass (14) and against the secondary mass (20).

3. Torsional vibration damper according to Claim 1 or 2, **characterized in that** the first sealing ring (40) and the second sealing ring (42) configure a labyrinth seal in the radial direction, the first sealing ring (40) and the second sealing ring (42), in particular, overlapping one another at least partially as viewed in the radial direction.

4. Torsional vibration damper according to one of Claims 1 to 3, **characterized in that** the first sealing ring (42) and the second sealing ring (42) are coupled fixedly to one another so as to rotate together, the first sealing ring (40), in particular, having radially outwardly and/or radially inwardly projecting first elevations (50), and the second sealing ring (42) having radially outwardly and/or radially inwardly projecting second elevations (50), the first elevations (50) and the second elevations (50) engaging into one another in a positively locking manner.

5. Torsional vibration damper according to one of Claims 1 to 4, **characterized in that** the sealing spring (44) is configured as a helical spring, a mandrel (46) of the first sealing ring (40) and/or the second sealing ring (42) being plugged at least partially into the sealing spring (44), and/or the sealing spring (44) being received at least partially in a corresponding pocket (48) of the first sealing ring (40) and/or the second sealing ring (42).

6. Torsional vibration damper according to one of Claims 1 to 5, **characterized in that** the first sealing ring (40) and the second sealing ring (42) are produced from a plastic material, in particular EPDM, silicone elastomer, PU elastomer, PE, PP or PA.

7. Torsional vibration damper according to one of Claims 1 to 6, **characterized in that** a radially outermost edge of the mounting opening (32) is arranged on a first radius R₁, and a radially inner edge of the sealing device (36) at the angular point of the radially outermost edge of the mounting opening (32) is arranged on a radius R₂, wherein 0.95 ≤ R₁/R₂ ≤ 1.20, in particular 1.00 ≤ R₁/R₂ ≤ 1.10, preferably 1.01 ≤ R₁/R₂ ≤ 1.05, and particularly preferably 1.02 ≤ R₁/R₂ ≤ 1.025.

8. Torsional vibration damper according to one of Claims 1 to 7, **characterized in that** the sealing device (36) is arranged completely radially within the output flange (18), the output flange (18) being connected, in particular, radially outside the sealing device (36) fixedly to the secondary mass (20) so as to rotate with it.

9. Torsional vibration damper according to one of Claims 1 to 8, **characterized in that** the secondary mass (20) is mounted indirectly or directly on the primary mass (14) radially within the mounting opening (32).

## Revendications

1. Amortisseur d'oscillations de torsion, en particulier volant bimasse pour l'amortissement des oscillations de torsion entre un arbre d'entraînement d'un moteur de véhicule automobile et un arbre d'entrée de boîte de vitesses d'une boîte de vitesses de véhicule automobile, comprenant
une masse primaire (14) pour introduire un couple, une masse secondaire (20) pouvant tourner par rapport à la masse primaire (14), pour évacuer un couple,
un élément accumulateur d'énergie (16) pouvant être accouplé à la masse primaire (14) et à la masse secondaire (20), en particulier un ressort en arc, l'élément accumulateur d'énergie (16) étant reçu dans un canal de réception (24) réalisé par la masse primaire (14),
une bride de sortie (18) pénétrant radialement depuis l'intérieur dans le canal de réception (24) pour le transfert de couple entre élément accumulateur d'énergie (16) et la masse secondaire (20),
la masse secondaire (20) présentant au moins une ouverture de montage (32) pour y faire passer axialement un moyen de fixation (30), en particulier une vis de fixation, pour la fixation de la masse primaire (14) à un arbre d'entraînement d'un moteur de véhicule automobile, et
un dispositif d'étanchéité (36) s'appliquant contre la masse primaire (14) et la masse secondaire (20), le dispositif d'étanchéité (36) limitant radialement vers l'intérieur un canal de montage (38) pour le passage du moyen de fixation (30), le dispositif d'étanchéité (36) présentant une première bague d'étanchéité (40) s'appliquant contre la masse primaire (14) et une deuxième bague d'étanchéité (42) s'appliquant contre la masse secondaire (20), **caractérisé en ce que** au moins un ressort d'étanchéité (44) disposé entre la première bague d'étanchéité (40) et la deuxième bague d'étanchéité (42) est prévu pour repousser l'une de l'autre la première bague d'étanchéité (40) et la deuxième bague d'étanchéité (42).

2. Amortisseur d'oscillations de torsion selon la revendication 1, **caractérisé en ce que** la force de ressort appliquée par l'au moins un ressort d'étanchéité (44) est dimensionnée de manière à équilibrer une tolérance de montage axiale pour le dispositif d'étanchéité (36), la force de ressort étant notamment dimensionnée pour fournir un pour une étanchéité aux fluides, en particulier à l'eau, du dispositif d'étanchéité (36) au niveau de la masse primaire (14) et au niveau de la masse secondaire (20).

3. Amortisseur d'oscillations de torsion selon la revendication 1 ou 2, **caractérisé en ce que** la première bague d'étanchéité (40) et la deuxième bague d'étanchéité (42) constituent dans la direction radiale un joint à labyrinthe, en particulier la première bague d'étanchéité (40) et la deuxième bague d'étanchéité (42), considérées dans la direction radiale, se recouvrant au moins en partie.

4. Amortisseur d'oscillations de torsion selon l'une quelconque des revendications 1 à 3, **caractérisé en ce que** la première bague d'étanchéité (42) et la deuxième bague d'étanchéité (42) sont accouplées l'une à l'autre de manière solidaire en rotation, en particulier la première bague d'étanchéité (40) présentant des premiers rehaussements (50) faisant saillie radialement vers l'extérieur et/ou radialement vers l'intérieur et la deuxième bague d'étanchéité (42) présentant des deuxièmes rehaussements (50) faisant saillie radialement vers l'extérieur et/ou radialement vers l'intérieur, les premiers rehaussements (50) et les deuxièmes rehaussements (50) s'engageant les uns dans les autres par correspondance de formes.

5. Amortisseur d'oscillations de torsion selon l'une quelconque des revendications 1 à 4, **caractérisé en ce que** le ressort d'étanchéité (44) est réalisé sous forme de ressort à boudin, un mandrin (46) de la première bague d'étanchéité (40) et/ou de la deuxième bague d'étanchéité (42) étant enfiché au moins en partie dans le ressort d'étanchéité (44) et/ou le ressort d'étanchéité (44) étant reçu au moins en partie dans une cavité correspondante (48) de la première bague d'étanchéité (40) et/ou de la deuxième bague d'étanchéité (42).

6. Amortisseur d'oscillations de torsion selon l'une quelconque des revendications 1 à 5, **caractérisé en ce que** la première bague d'étanchéité (40) et la deuxième bague d'étanchéité (42) se composent d'un matériau en plastique, en particulier de l'EPDM, un élastomère de silicone, un élastomère de PU, du PE, du PP ou du PA.

7. Amortisseur d'oscillations de torsion selon l'une quelconque des revendications 1 à 6, **caractérisé en ce qu'**un bord le plus extérieur radialement de l'ouverture de montage (32) est disposé sur un premier rayon R₁ et un bord radialement intérieur du dispositif d'étanchéité (36) au niveau du point angulaire du bord radialement le plus extérieur de l'ouverture de montage (32) est disposé sur un rayon R₂, avec 0,95 ≤ R₁/R₂ ≤ 1,20, en particulier 1,00 ≤ R₁/R₂ ≤ 1,10, de préférence 1,01 ≤ R₁/R₂ ≤ 1,05, et particulièrement préférablement 1,02 ≤ R₁/R₂ ≤ 1,025.

8. Amortisseur d'oscillations de torsion selon l'une quelconque des revendications 1 à 7, **caractérisé en ce que** le dispositif d'étanchéité (36) est disposé complètement radialement à l'intérieur de la bride de sortie (18), la bride de sortie (18) étant notamment connectée radialement à l'extérieur du dispositif d'étanchéité (36) de manière solidaire en rotation avec la masse secondaire (20).

9. Amortisseur d'oscillations de torsion selon l'une quelconque des revendications 1 à 8, **caractérisé en ce que** la masse secondaire (20) est supportée radialement à l'intérieur de l'ouverture de montage (32) de manière directe ou indirecte sur la masse primaire (14).
